# EUROPÄISCHE PATENTSCHRIFT

(11) **EP 2 770 170 B1**
(45) Veröffentlichungstag und Bekanntmachung des Hinweises auf die Patenterteilung: **31.01.2018**
(21) Anmeldenummer: 13005004.0
(22) Anmeldetag: 18.10.2013
(51) Int. Cl.: F01K 23/06, F02G 5/00

(54) **Abwärmenutzungssystem, insbesondere für ein Kraftfahrzeug, mit einer Speisepumpe**
Waste heat reuse system, in particular for a motor vehicle, with a feed pump
Dispositif d'utilisation de la chaleur rejetée, en particulier pour véhicule automobile, doté d'une pompe d'alimentation

(30) Priorität: 25.02.2013 AT 1372013
(43) Veröffentlichungstag der Anmeldung: 27.08.2014
(73) Patentinhaber: MAN Truck & Bus Österreich AG, 4400 Steyr (AT)
(72) Erfinder: Raab, Gottfried, 4320 Perg (AT); Klammer, Josef, 4400 Steyr (AT); Robausch, Stefan, 4400 St. Ulrich bei Steyr (AT)
(74) Vertreter: Liebl, Thomas

(56) Entgegenhaltungen:
- EP-A1- 2 357 349
- WO-A1-2010/029905
- WO-A1-2013/002017
- FR-A1- 2 868 809
- JP-A- 2010 127 138
- US-A- 5 191 766
- US-A1- 2011 192 178

## Beschreibung

Die Erfindung betrifft ein Abwärmenutzungssystem, insbesondere für ein Kraftfahrzeug mit Brennkraftmaschine, mit einer Speisepumpe nach dem Oberbegriff des Anspruchs 1, ein Fahrzeug nach Anspruch 16 und ein Verfahren nach Anspruch 17.

In einem allgemein bekannten System zur Abwärmenutzung in einem Kraftfahrzeug werden Druck und Durchfluss durch eine Speisepumpe, die ohne Festlegung auf das jeweilige Arbeitsmedium oft auch als Speisewasserpumpe bezeichnet wird, bereitgestellt. Die Bauformen solcher Speisepumpen können unterschiedlich sein, beispielsweise Axialkolbenpumpen, Axialkolbenverstellpumpen, Membrankolbenpumpen, um nur einige Beispiele zu nennen. Diese Pumpen können in allgemein bekannter Weise elektrisch oder mechanisch angetrieben werden.

Bei der mechanischen Kopplung an die Brennkraftmaschine ist die Pumpendrehzahl über eine Über- oder Untersetzung an die Motordrehzahl gekoppelt, wodurch der zur Verfügung stehende Durchfluss und der Pumpenaustrittsdruck je nach Pumpencharakteristik vorgegeben sind. Es stehen somit bei einer mechanisch durch die Brennkraftmaschine angetriebenen Speisepumpe Massenströme des Arbeitsmediums, an unterschiedlichen Betriebspunkten, beispielsweise während eines Aufwärmvorgangs zur Verfügung, die nicht immer vollständig benötigt werden. Falls der von der Speisepumpe wegen der Drehzahlkopplung zwangsläufig zur Verfügung gestellte Massenstrom nicht benötigt wird, wird dieser unmittelbar wieder an den Arbeitsmediumtank zurückgeführt. Die notwendige Energie für den zusätzlich gepumpten Medienmassenstrom muss von der Brennkraftmaschine bereitgestellt werden und verursacht einen ungünstigen Kraftstoffmehrverbrauch.

Ein weiteres Problem beim Betrieb einer Speisepumpe in einem Abwärmenutzungssystem eines Kraftfahrzeugs besteht darin, dass als Arbeitsmedien wasserbasierende Medien, insbesondere Wasser mit oder ohne organischen Zusätzen verwendet werden können. Diese Medien haben die negative Eigenschaft, dass sie bei niedrigen Temperaturen in Verbindung mit einer Volumenvergrößerung zu einem harten Körper gefrieren. Speisepumpen sind für den Betrieb mit gefrorenem Arbeitsmedium nicht geeignet und können dabei beschädigt werden, was im ungünstigsten Fall zu einem dauerhaften Totalausfall führen kann.

Die US 2014/0116051 A1 offenbart ein Abwärmenutzungssystem mit einer Speicherpumpe, bei dem in dem Abwärmenutzungssystem ein Temperatursensor zur Erfassung der aktuellen Arbeitsmedium-Temperatur angeordnet ist. Der Temperatursensor ist hier dabei an eine Steuereinheit zur Steuerung eines Pumpenantriebs angeschlossen. Diese Steuereinheit aktiviert die Pumpenförderung bei einem Betrieb einer Brennkraftmaschine des das Abwärmenutzungssystem aufweisenden Fahrzeugs automatisch. US 5191766 A1 offenbart ein Abwärmenutzungssystem gemäß dem Oberbegriff des Anspruchs 1. Aufgabe der Erfindung ist es, ein Abwärmenutzungssystem, insbesondere für ein Kraftfahrzeug mit Brennkraftmaschine, mit einer Speisepumpe so weiterzubilden und auszurüsten, dass ein Schädigungsschutz für die Speisepumpe bei tiefen Temperaturen und/oder ein energetisch optimierter Einsatz erreicht werden.

Diese Aufgabe wird gelöst mit den Merkmalen der unabhängigen Patentansprüche. Vorteilhafte Ausgestaltungen hierzu sind Gegenstand der Unteransprüche.

Gemäß Patentanspruch 1 wird ein Abwärmenutzungssystem, insbesondere für ein Kraftfahrzeug mit einer Brennkraftmaschine, vorgeschlagen, das eine Speisepumpe aufweist, wobei im Abwärmenutzungssystem wenigstens ein Temperatursensor zur direkten oder indirekten Erfassung der aktuellen Arbeitsmedium-Temperatur angeordnet ist, wobei der wenigstens eine Temperatursensor an eine Steuereinheit zur Steuerung eines Pumpenantriebs angeschlossen ist. Erfindungsgemäß ist vorgesehen, dass in der Steuereinheit wenigstens ein Temperaturschwellwert vorgegeben ist, der mit der aktuellen Arbeitsmedium-Temperatur verglichen wird. Bei einer Unterschreitung eines Temperaturschwellwerts deaktiviert die Steuereinheit den Pumpenantrieb und damit die Pumpenförderung. Bei einer Überschreitung dieses Temperaturwerts oder eines gegenüber dieses Temperaturschwellwerts definiert höheren Temperaturschwellwerts wird die Pumpenförderung eingeschaltet.

Für einen Schädigungsschutz der Speisepumpe bei tiefen Temperaturen wird der Temperaturschwellwert entsprechend der Gefriertemperatur des Arbeitsmediums gewählt. Bei einer Unterschreitung dieses Temperaturschwellwerts ist davon auszugehen, dass gefrorenes Arbeitsmedium in der Speisepumpe enthalten ist oder gebildet wird. Mittels der Steuereinheit wird bei diesem Betriebszustand der Pumpenantrieb und damit die Pumpenförderung deaktiviert. Um ein Pendeln zwischen Abschalten und Einschalten an diesen Temperaturschwellwert auszuschließen, soll für den Einschaltvorgang ein zweiter Temperaturschwellwert entsprechend einer Zweipunktregelung mit einem Schaltabstand über dem ersten Temperaturschwellwert vorgesehen werden.

Um eine möglichst genaue Information über eine aktuelle Arbeitsmediumtemperatur zu erhalten, soll ein Temperatursensor direkt im Arbeitsmedium im Pumpenbereich und/oder am oder im Pumpengehäuse angeordnet sein.

Bei einem nicht betriebenen, abgestellten Kraftfahrzeug wird bei Gefrierbedingungen für das Arbeitsmedium zumindest eine gefrorene Restmenge in der Speisepumpe gebildet. Diese soll daher so ausgelegt sein, dass dadurch bei deaktivierter Pumpe keine Pumpenschädigung entsteht. Mit der erfindungsgemäßen Steuerung wird sichergestellt, dass in diesem Zustand die Speisepumpe nicht anläuft und dadurch beschädigt werden kann oder die Speisepumpe gegen das gefrorene Arbeitsmedium arbeiten muss.

Um aus dem bestehenden Zustand mit einem gefrorenen Arbeitsmedium nach einem Start der Brennkraftmaschine möglichst schnell zu einem zulässigen und störungsfreien Betrieb der Speisepumpe zu gelangen, wird weiter erfindungsgemäß vorgeschlagen, diese an den sich erwärmenden Kühlkreislauf der Brennkraftmaschine anzuschließen. Insbesondere kann dabei die Kühlflüssigkeit durch Kanäle des Gehäuses der Speisepumpe geleitet werden, so dass das in der Speisepumpe enthaltene gefrorene Arbeitsmedium schnell auftaut und verflüssigt. Nach Erreichen des Einschalt-Temperaturschwellwerts wird dann die Speisepumpe automatisch gestartet. Der Durchfluss der Kühlflüssigkeit durch die Speisepumpe kann in Abhängigkeit der Arbeitsmedium-Temperatur, insbesondere wenn das Arbeitsmedium aufgetaut ist, gegebenenfalls wieder unterbrochen und abgeschaltet werden.

Die erfindungsgemäße Anordnung und Steuerung ist geeignet für einen Pumpenantrieb, der aus einer mechanischen Übertragungsvorrichtung zur direkten Übertragung einer Drehung der Brennkraftmaschine auf eine Pumpenantriebswelle besteht. In an sich bekannter Weise kann ein solcher direkter mechanischer Antrieb mit einem Abtriebsrad an der Brennkraftmaschine und einem Antriebsrad auf der Pumpenantriebswelle sowie eine drehübertragende Verbindung durch ein Umschlingungs- oder ein anderes Triebmittel realisiert sein. Dazu sind unterschiedliche Ausführungen, zum Beispiel Riemenscheiben, Zahnräder etc. mit unterschiedlichen zugeordneten Umschlingungsmitteln, wie beispielsweise Zahnriemen, Keilriemen, Ketten, etc. bekannt. Weiter sind entsprechende direkte Zahnradkoppelungen mit ineinandergreifenden Zahnrädern bekannt.

In einer bevorzugten Ausführungsform wird zum Deaktivieren/Einschalten des Pumpenantriebs eine mittels der Steuereinheit schaltbare Kupplung in der Pumpenantriebswelle vorgeschlagen, mit der die mechanische Kopplung an die Drehzahl der Brennkraftmaschine unterbrochen oder hergestellt werden kann.

Mit einer solchen Kupplung kann der Pumpenantrieb beim Unterschreiten eines Temperaturschwellwerts bei Gefrierbedingungen zum Schutz der Speisepumpe so lange abgeschaltet verbleiben, bis ein sicherer Betrieb ohne gefrorenes Arbeitsmedium bei einer entsprechend detektierten Temperatur über dem Gefrierpunkt möglich ist.

Des Weiteren kann mit dieser Kupplung der Pumpenantrieb gegebenenfalls auch dann deaktiviert werden, bzw. deaktiviert bleiben, wenn erforderliche Grenztemperaturen des Abwärmenutzungssystems bei einem Aufwärmvorgang noch nicht erreicht sind, um das Abwärmenutzungssystem betreiben zu können. Im Aufwärmvorgang kann somit durch zum Beispiel zeitweise Abschaltung des Pumpenantriebs mittels der Kupplung der Betrieb der Speisepumpe energetisch optimiert werden.

Des Weiteren kann der Betrieb der Speisepumpe auch dadurch energetisch optimiert werden, dass im Bremsbetrieb und/oder Schubbetrieb der Brennkraftmaschine mittels der Kupplung bei einem mechanischen Pumpenantrieb die Drehzahlkopplung der Speisepumpe an die Brennkraftmaschine unterbrochen wird: Im Bremsbetrieb der Brennkraftmaschine ist eine Leistungsabgabe des Expanders unerwünscht und dieser wird daher im Bremsbetrieb deaktiviert. Um dabei den Kondensator vor Überlast zu schützen und eventuell zur Kondensation zusätzlich benötigte Lüfterantriebsleistung zu vermeiden, wird der Massenstrom durch die Verdampfer reduziert. Durch das geringe Wärmeangebot im Schubbetrieb der Brennkraftmaschine tritt bei einem mechanischen Pumpenantrieb mit einer Drehzahlkopplung an die Brennkraftmaschine ohne dessen Abschaltung überschüssiges Arbeitsmedium auf, welches mit negativer Auswirkung auf die Energiebilanz des Abwärmenutzungssystems abgesteuert werden muss. Dies wird beim Detektieren eines solchen Brems- und/oder Schubbetriebs durch die gesteuerte Unterbrechung des Pumpenantriebsstrangs mittels der Kupplung verhindert.

Der vorstehend angegebene Schädigungsschutz für eine Speisepumpe bei Gefrierbedingungen für das Arbeitsmedium ist auch bei einer Speisepumpe mit regelbarem Fördervolumen einsetzbar (Verstellpumpe). Anstelle einer schaltbaren Kupplung kann jedoch hier bei einer detektierten Temperatur am Gefrierpunkt des Arbeitsmediums die Speisepumpe automatisch mittels der Regelung auf Nullförderung gestellt werden, bzw. bei Anlaufen der Speisepumpe unterbunden werden, dass die Pumpe gegen das gefrorene Medium fördert.

Des Weiteren werden ein Fahrzeug und ein Verfahren beansprucht. Die sich hierdurch ergebenden Vorteile wurden bereits zuvor ausführlich erläutert.

Anhand einer Zeichnung werden Ausführungsformen der Erfindung näher erläutert.

Es zeigen:
- Fig. 1: eine Anordnung und Steuerung einer Speisepumpe in einem Abwärmenutzungssystem eines Kraftfahrzeugs mit entkoppelbarem, mechanischem Pumpenantrieb durch eine Brennkraftmaschine,
- Fig. 2: eine Anordnung und Steuerung einer Speisepumpe in einem Abwärmenutzungssystem eines Kraftfahrzeugs mit elektrischem Pumpenantrieb, und
- Fig. 3: eine Anordnung und Steuerung einer Speisepumpe in einem Abwärmenutzungssystem eines Kraftfahrzeugs mit mechanischem Antrieb einer Pumpe mit regelbarem Fördervolumen.

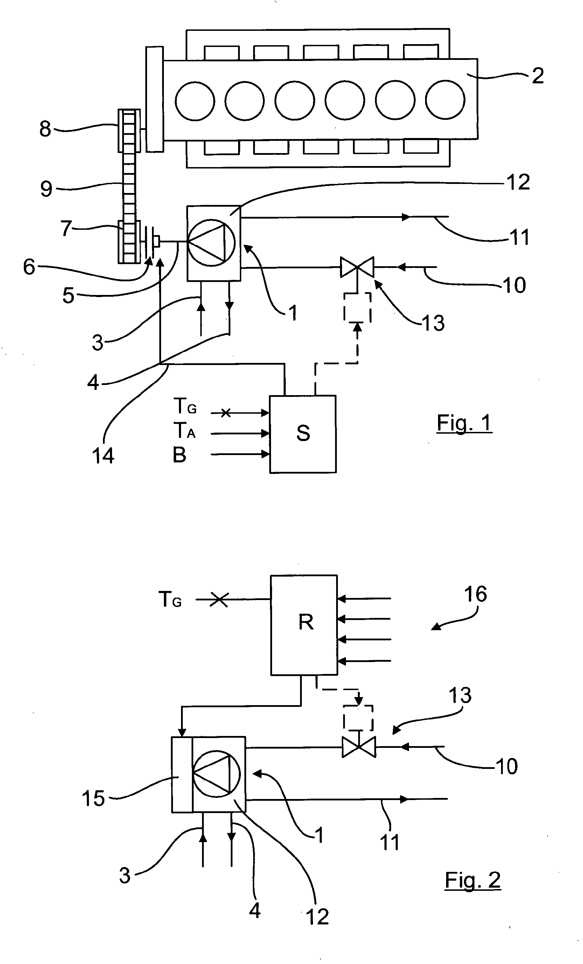

In Fig. 1 ist schematisch eine Speisepumpe 1 in einem Abwärmenutzungssystem eines Kraftfahrzeugs mit einer Brennkraftmaschine 2 dargestellt. Das Abwärmenutzungssystem selbst ist nicht gezeigt sondern lediglich zwei Anschlussleitungen als Zulauf 3 und Ablauf 4 der Speisepumpe 1 für ein wasserbasierendes Arbeitsmedium. Die Speisepumpe 1 weist eine Pumpenantriebswelle 5 auf mit einer schaltbaren Kupplung 6 und einer endseitigen Riemenscheibe 7. Der Riemenscheibe 7 ist eine weitere Riemenscheibe 8 zugeordnet, die drehzahlgekoppelt von der Brennkraftmaschine angetrieben wird. Die beiden Riemenscheiben 7 und 8 sind mit einem Riemen 9 verbunden, wodurch die Speisepumpe 1 mechanisch drehzahlgekoppelt von der Brennkraftmaschine 2 angetrieben ist.

Zudem ist schematisch ein mit der Brennkraftmaschine 2 verbundener Kühlmittelzulauf 10 und Kühlmittelrücklauf 11 zu Kanälen im Pumpengehäuse 12 dargestellt, wobei im Kühlmittelzulauf 10 eine hier beispielhaft und bevorzugt als Magnetventil 13 ausgebildete Ventileinrichtung angeordnet ist.

Zur Steuerung der Kupplung 6 und gegebenenfalls des Magnetventils 13 ist eine Steuereinheit S vorgesehen, an die ein Temperatursensor T_{G} mit nachgeschalteter Temperaturschwellwerteinheit für Gefrierbedingungen des Arbeitsmediums und ein Temperatursensor T_{A} mit nachgeschalteter Temperaturschwellwerteinheit zur Detektierung von Betriebsbedingungen während eines Aufwärmvorgangs des Abwärmenutzungssystems angeschlossen sind. Die beiden genannten Temperaturschwelleinheiten können gegebenenfalls auch an einen gemeinsamen Temperatursensor angeschlossen sein.

Zudem ist der Steuereinheit S ein Signal B zugeführt, welches einen Brems- und/oder Schubbetrieb der Brennkraftmaschine detektiert.

Die dargestellte Anordnung und Steuerung der Speisepumpe 1 hat im Wesentlichen folgende Funktion:
Unter normalen Umgebungs- und Betriebsbedingungen sind die Kupplung 6 und das Magnetventil 13 geschlossen. Wenn über den Sensor T_{G} Gefrierbedingungen für das Arbeitsmedium detektiert werden, ist über die Steuerleitung 14 die Kupplung 6 geöffnet und damit der Antriebsstrang zur Speisepumpe 1 unterbrochen.

Auch bei einem mit dem Sensor T_{A} detektierten Aufwärmvorgang des Abwärmenutzungssystems, wenn erforderliche Grenztemperaturen des Systems noch nicht erreicht sind, wird durch die Steuereinheit S die Kupplung 6 offengehalten. Zumindest bei detektierten Gefrierbedingungen wird zudem durch die Steuereinheit S das Magnetventil 13 offengehalten, um durch das sich erwärmende Kühlmittel ein möglichst schnelles "Auftauen" von gefrorenem Arbeitsmedium zu erreichen.

Mit dem Signal B wird der Steuereinheit S ein Brems- und/oder Schubbetrieb angezeigt, bei der ebenfalls die Kupplung 6 geöffnet wird.

In Fig. 2 ist eine alternative zweite Anordnung dargestellt, bei der die Speisepumpe 1 jedoch nicht drehzahlgekoppelt von einer Brennkraftmaschine 2 sondern unmittelbar von einem (schematisch dargestellten) Elektromotor 15 angetrieben wird. Auch hier weist die Speisepumpe 1 einen Zulauf 3 und einen Ablauf 4 für das Arbeitsmedium auf. Kanäle im Pumpengehäuse 12 sind auch hier an einen Kühlmittelzulauf 10 mit einem Magnetventil 13 und einen Kühlmittelrücklauf 11 angeschlossen. Mit einem Regler R wird hier das Fördervolumen der Speisepumpe 1, insbesondere durch Veränderung der Drehzahl des Elektromotors 15 bedarfsgerecht geregelt, wozu der Regler R weitere Informationen über die relevanten Betriebsbedingungen im Abwärmenutzungssystem (dargestellt durch Pfeile 16) erhält.

Zudem ist an den Regler R auch ein Temperatursensor T_{G} angeschlossen, mit dem in Verbindung mit einer Schwellwertschaltung im Regler R Gefrierbedingungen für das Arbeitsmedium an der Speisepumpe detektiert werden. Bei einer solchen Gefrierbedingung wird mit dem Regler R eine Nullförderung der Speisepumpe 1 eingestellt, wodurch der Elektromotor 15 die Speisepumpe 1 nicht antreibt. Somit kann erreicht werden, dass auch hier die Speisepumpe 1 sowie gegebenenfalls andere Komponenten im Abwärmenutzungssystem durch gefrorenes Arbeitsmedium keinen Schaden nehmen.

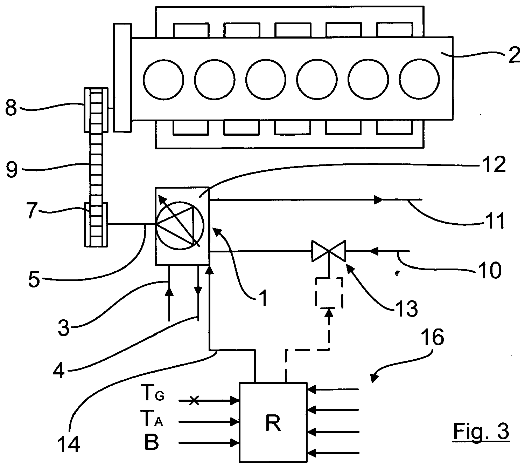

In Fig. 3 ist eine alternative dritte Anordnung dargestellt, bei der die Speisepumpe 1 mechanisch drehzahlgekoppelt von einer Brennkraftmaschine 2 angetrieben wird und die Speisepumpe 1 als Pumpe mit verstellbarem Fördervolumen ausgeführt ist. Auch hier weist die Speisepumpe 1 einen Zulauf 3 und einen Ablauf 4 für das Arbeitsmedium auf. Kanäle im Pumpengehäuse 12 sind auch hier an einen Kühlmittelzulauf 10 mit einem Magnetventil 13 und einen Kühlmittelrücklauf 11 angeschlossen. Mit einem Regler R wird hier das Fördervolumen der Speisepumpe 1, insbesondere durch Verstellung der Pumpenfördermenge bedarfsgerecht geregelt, wozu der Regler R weitere Informationen über die relevanten Betriebsbedingungen im Abwärmenutzungssystem (dargestellt durch Pfeile 16) erhält.

Zudem ist an den Regler R auch ein Temperatursensor T_{G} angeschlossen, mit dem in Verbindung mit einer Schwellwertschaltung im Regler R Gefrierbedingungen für das Arbeitsmedium an der Speisepumpe detektiert werden. Bei einer solchen Gefrierbedingung wird mit dem Regler R eine Nullförderung der Speisepumpe 1 eingestellt, wodurch auch bei angetriebener Speisepumpe kein Medium gefördert wird. Somit kann erreicht werden, dass auch hier die Speisepumpe 1 sowie gegebenenfalls andere Komponenten im Abwärmenutzungssystem durch gefrorenes Arbeitsmedium keinen Schaden nehmen.

### Bezugszeichenliste

- 1: Speisepumpe
- 2: Brennkraftmaschine
- 3: Zulauf, Arbeitsmedium
- 4: Ablauf Arbeitsmedium
- 5: Pumpenantriebswelle
- 6: Kupplung
- 7: Riemenscheibe
- 8: Riemenscheibe
- 9: Zahnriemen
- 10: Kühlmittelzulauf
- 11: Kühlmittelrücklauf
- 12: Pumpengehäuse
- 13: Magnetventil
- 14: Steuerleitung
- 15: Elektromotor
- 16: Pfeile
- S: Steuereinheit
- R: Regler
- T_{G}: Temperatursensor
- T_{A}: Temperatursensor
- B: Signal

## Patentansprüche

1. Abwärmenutzungssystem, insbesondere für ein Kraftfahrzeug mit einer Brennkraftmaschine, das eine Speisepumpe (1) aufweist,
wobei im Abwärmenutzungssystem wenigstens ein Temperatursensor (T_{G}, T_{A}) zur direkten oder indirekten Erfassung der aktuellen Arbeitsmedium-Temperatur angeordnet ist,
wobei der wenigstens eine Temperatursensor (T_{G}, T_{A}) an eine Steuereinheit (S) zur Steuerung eines Pumpenantriebs angeschlossen ist, wobei in der Steuereinheit (S) wenigstens ein Temperaturschwellwert vorgegeben ist, der mit der aktuellen Arbeitsmedium-Temperatur verglichen wird, und wobei bei einer Unterschreitung eines Temperaturschwellwerts mittels der Steuereinheit (S) der Pumpenantrieb und damit die Pumpenförderung deaktiviert sind und bei einer Überschreitung dieses Temperaturschwellwerts oder eines gegenüber dieses Temperaturschwellwerts definiert höheren zweiten Temperaturschwellwerts der Pumpenantrieb und damit die Pumpenförderung eingeschaltet sind, **dadurch gekennzeichnet, dass** ein Gehäuse (12) der Speisepumpe (1) an den Kühlkreislauf (10, 11) der Brennkraftmaschine (2) angeschlossen ist und dessen Durchfluss durch das Pumpengehäuse (12) mittels einer Ventileinrichtung steuerbar ist.

2. Abwärmenutzungssystem nach Anspruch 1, **dadurch gekennzeichnet, dass** der Temperaturschwellwert als Deaktivierungs-Schwellwert der Gefriertemperatur des Arbeitsmediums entspricht oder der zweite Temperaturschwellwert als Einschalt-Schwellwert mit einem Schalterabstand über dem ersten Temperaturschwellwert liegt.

3. Abwärmenutzungssystem nach Anspruch 1 oder Anspruch 2, **dadurch gekennzeichnet, dass** der wenigstens eine Temperatursensor im Arbeitsmedium im Pumpenbereich und/oder am oder im Pumpengehäuse angeordnet ist.

4. Abwärmenutzungssystem nach einem der Ansprüche 1 bis 3, **dadurch gekennzeichnet, dass** die Speisepumpe (1) so ausgelegt ist, dass eine definierte gefrorene Restmenge an Arbeitsmedium bei deaktivierter Pumpe zu keiner Pumpenschädigung führt.

5. Abwärmenutzungssystem nach einem der Ansprüche 1 bis 4, **dadurch gekennzeichnet, dass** der Durchfluss des Kühlkreislaufs (10, 11) durch das Pumpengehäuse (12) mittels der Steuereinheit (S) in Abhängigkeit der Arbeitsmedium-Temperatur des Abwärmenutzungssystems mittels der Ventileinrichtung steuerbar ist, und/oder dass die Ventileinrichtung durch ein Magnetventil (13) gebildet ist.

6. Abwärmenutzungssystem nach einem der Ansprüche 1 bis 4, **dadurch gekennzeichnet, dass** der Pumpenantrieb aus einer mechanischen Übertragungsvorrichtung (7, 8, 9) zur Übertragung einer Drehung der Brennkraftmaschine (2) auf eine Pumpenantriebswelle (5) besteht.

7. Abwärmenutzungssystem nach Anspruch 6, **dadurch gekennzeichnet, dass** der mechanische Pumpenantrieb aus einem Abtriebsrad (8) an der Brennkraftmaschine (2) und einem Antriebsrad (7) auf der Pumpenantriebswelle (5) besteht, die durch ein Umschlingungsmittel (9) drehübertragend verbunden sind.

8. Abwärmenutzungssystem nach Anspruch 6, **dadurch gekennzeichnet, dass** der mechanische Pumpenantrieb aus einem Abtriebszahnrad an der Brennkraftmaschine (2) und einem Antriebszahnrad auf der Pumpenantriebswelle (5) besteht, die direkt oder über ein oder mehrere Zwischenzahnräder drehübertragend verbunden sind.

9. Abwärmenutzungssystem nach einem der Ansprüche 1 bis 8, **dadurch gekennzeichnet, dass** in der Pumpenantriebswelle (5) eine mit der Steuereinheit (S) schaltbare Kupplung (6) angeordnet ist, mit der die Kopplung an die Drehzahl der Brennkraftmaschine (2) und damit der Pumpenantrieb abschaltbar und zuschaltbar ist.

10. Abwärmenutzungssystem nach Anspruch 9, **dadurch gekennzeichnet, dass** die Kupplung (6) beim Unterschreiten eines Temperaturschwellwerts bei Gefrierbedingungen und/oder beim Unterschreiten wenigstens eines dagegen höheren Temperaturschwellwerts beim Aufwärmvorgang des Abwärmenutzungssystems und/oder bei einem detektierten Brems- und/oder Schubbetrieb der Brennkraftmaschine (2) mittels der Steuereinheit (S) öffnet und dadurch der Pumpenantrieb abgeschaltet wird oder abgeschaltet bleibt.

11. Abwärmenutzungssystem nach einem der Ansprüche 1 bis 8, **dadurch gekennzeichnet, dass** die Pumpenantriebswelle eine permanente Kopplung an die Drehzahl der Brennkraftmaschine (2) aufweist und die Pumpe als Verstellpumpe, mit einer mit der Regeleinheit (R) regelbaren Fördermenge, ausgeführt ist.

12. Abwärmenutzungssystem nach Anspruch 11, **dadurch gekennzeichnet, dass** die Pumpenfördermenge beim Unterschreiten eines Temperaturschwellwerts bei Gefrierbedingungen und/oder beim Unterschreiten wenigstens eines dagegen höheren Temperaturschwellwerts beim Aufwärmvorgang des Abwärmenutzungssystems und/oder bei einem detektierten Brems- und/oder Schubbetrieb der Brennkraftmaschine (2) mittels der Regeleinheit (R) auf Null gesetzt wird.

13. Abwärmenutzungssystem nach einem der Ansprüche 1 bis 5, **dadurch gekennzeichnet, dass** der Pumpenantrieb aus einer elektrischen Antriebseinheit (15) besteht.

14. Abwärmenutzungssystem nach Anspruch 13, **dadurch gekennzeichnet, dass** die Pumpendrehzahl beim Unterschreiten eines Temperaturschwellwerts bei Gefrierbedingungen und/oder beim Unterschreiten wenigstens eines dagegen höheren Temperaturschwellwerts beim Aufwärmvorgang des Abwärmenutzungssystems und/oder bei einem detektierten Brems- und/oder Schubbetrieb der Brennkraftmaschine (2) mittels der Regeleinheit (R) auf Null gesetzt wird.

15. Abwärmenutzungssystem nach einem der Ansprüche 1 bis 14, **dadurch gekennzeichnet, dass** die Steuereinheit (S) und/oder gegebenenfalls eine Regeleinheit (R) für die Speisepumpe (1) in eine übergeordnete Fahrzeug-Steuer-/Regeleinheit integriert ist.

16. Fahrzeug, insbesondere Kraft- und/oder Nutzfahrzeug, mit einem Abwärmenutzungssystem nach einem der vorhergehenden Ansprüche.

17. Verfahren zum Betreiben eines Abwärmenutzungssystems, insbesondere für ein Kraftfahrzeug mit einer Brennkraftmaschine, das eine Speisepumpe (1) aufweist, wobei im Abwärmenutzungssystem wenigstens ein Temperatursensor (T_{G}, T_{A}) zur direkten oder indirekten Erfassung der aktuellen Arbeitsmedium-Temperatur angeordnet ist,
wobei der wenigstens eine Temperatursensor (T_{G}, T_{A}) an eine Steuereinheit (S) zur Steuerung eines Pumpenantriebs angeschlossen ist, wobei in der Steuereinheit (S) wenigstens ein Temperaturschwellwert vorgegeben ist, der mit der aktuellen Arbeitsmedium-Temperatur verglichen wird, und wobei bei einer Unterschreitung eines Temperaturschwellwerts mittels der Steuereinheit (S) der Pumpenantrieb und damit die Pumpenförderung deaktiviert sind und bei einer Überschreitung dieses Temperaturschwellwerts oder eines gegenüber dieses Temperaturschwellwerts definiert höheren zweiten Temperaturschwellwerts der Pumpenantrieb und damit die Pumpenförderung eingeschaltet sind, **dadurch gekennzeichnet dass** ein Gehäuse (12) der Speisepumpe (1) an den Kühlkreislauf (10, 11) der Brennkraftmaschine (2) angeschlossen ist und dessen Durchfluss durch das Pumpengehäuse (12) mittels einer Ventileinrichtung steuerbar ist.

## Claims

1. Waste heat usage system, in particular for a motor vehicle with an internal combustion engine, which has a feed pump (1),
wherein at least one temperature sensor (T_{G}, T_{A}) is arranged in the waste heat usage system for direct or indirect detection of the current working medium temperature,
wherein the at least one temperature sensor (T_{G}, T_{A}) is connected to a control unit (S) to control a pump drive,
wherein at least one temperature threshold value is predefined in the control unit (S) and is compared with the current working medium temperature,
and wherein when the temperature falls below a threshold value, the pump drive and hence the pump delivery are deactivated by the control unit (S) and when the temperature rises above this threshold value or a second threshold value higher than this threshold value, the pump drive and hence the pump delivery are switched on, **characterized in that** a housing (12) of the feed pump (1) is connected to the coolant circuit (10, 11) of the internal combustion engine (2) and its flow through the pump housing (12) can be controlled by means of a valve device.

2. Waste heat usage system according to Claim 1, **characterized in that** the temperature threshold value as a deactivation threshold value corresponds to the freezing temperature of the working medium, or the second temperature threshold value as an activation threshold value lies above the first temperature threshold value by a switching interval.

3. Waste heat usage system according to Claim 1 or Claim 2, **characterized in that** the at least one temperature sensor is arranged in the working medium in the pump region and/or in the pump housing.

4. Waste heat usage system according to any of Claims 1 to 3, **characterized in that** the feed pump (1) is designed such that a defined frozen residual quantity of working medium while the pump is deactivated does not lead to pump damage.

5. Waste heat usage system according to any of Claims 1 to 4, **characterized in that** the flow of the coolant circuit (10, 11) through the pump housing (12) can be controlled by means of the control unit (S) as a function of the working medium temperature of the waste heat usage system by means of the valve device, and/or **in that** the valve device is formed by a solenoid valve (13).

6. Waste heat usage system according to any of Claims 1 to 4, **characterized in that** the pump drive consists of a mechanical transmission device (7, 8, 9) to transmit a rotation of the internal combustion engine (2) to a pump drive shaft (5).

7. Waste heat usage system according to Claim 6, **characterized in that** the mechanical pump drive consists of an output wheel (8) at the internal combustion engine (2) and a drive wheel (7) on the pump drive shaft (5), which are connected by a wrapping means (9) in a rotation-transmitting manner.

8. Waste heat usage system according to Claim 6, **characterized in that** the mechanical pump drive consists of an output gear wheel on the internal combustion engine (2) and a drive gear wheel on the pump drive shaft (5), which are connected directly or indirectly via one or more intermediate gear wheels in a rotation-transmitting manner.

9. Waste heat usage system according to any of Claims 1 to 8, **characterized in that** a clutch (6) which can be switched by the control unit (S) is arranged in the pump drive shaft (5), by means of which clutch the coupling to the rotation speed of the internal combustion engine (2) and hence the pump drive can be switched on and off.

10. Waste heat usage system according to Claim 9, **characterized in that** the clutch (6) is opened by the control unit (S) when the temperature falls below a threshold value in freezing conditions and/or when the temperature falls below at least one higher threshold value during the warm-up process of the waste heat usage system and/or on when a braking and/or overrun mode of the internal combustion engine (2) is detected, and hence the pump drive is or remains switched off.

11. Waste heat usage system according to any of Claims 1 to 8, **characterized in that** the pump drive shaft has a permanent coupling to the rotation speed of the internal combustion engine (2) and the pump is designed as a variable displacement pump with a delivery quantity which can be controlled by the regulator unit (R).

12. Waste heat usage system according to Claim 11, **characterized in that** the pump delivery quantity is set to zero by the regulator unit (R) when the temperature falls below a threshold value in freezing conditions and/or when the temperature falls below at least one higher threshold value during the warm-up process of the waste heat usage system and/or when a braking and/or overrun mode of the internal combustion engine (2) is detected.

13. Waste heat usage system according to any of Claims 1 to 5, **characterized in that** the pump drive consists of an electric drive unit (15).

14. Waste heat usage system according to Claim 13, **characterized in that** the pump rotation speed is set to zero by the regulator unit (R) when the temperature falls below a threshold value in freezing conditions and/or when the temperature falls below at least one higher threshold value during the warm-up process of the waste heat usage system and/or when a braking and/or overrun mode of the internal combustion engine (2) is detected.

15. Waste heat usage system according to any of Claims 1 to 14, **characterized in that** the control unit (S) and/or where applicable a regulator unit (R) for the feed pump (1) is integrated in a master vehicle-control/regulator unit.

16. Vehicle, in particular car and/or truck, with a waste heat usage system according to any of the preceding claims.

17. Method for operating a waste heat usage system, in particular for a motor vehicle with an internal combustion engine, which has a feed pump (1),
wherein at least one temperature sensor (T_{G}, T_{A}) is arranged in the waste heat usage system for direct or indirect detection of the current working medium temperature,
wherein the at least one temperature sensor (T_{G}, T_{A}) is connected to a control unit (S) to control a pump drive,
wherein at least one temperature threshold value is predefined in the control unit (S) and is compared with the current working medium temperature,
and wherein when the temperature falls below a threshold value, the pump drive and hence the pump delivery are deactivated by the control unit (S) and when the temperature rises above this threshold value or a second threshold value higher than this threshold value, the pump drive and hence the pump delivery are switched on, **characterized in that** a housing (12) of the feed pump (1) is connected to the coolant circuit (10, 11) of the internal combustion engine (2) and its flow through the pump housing (12) can be controlled by means of a valve device.

## Revendications

1. Dispositif d'utilisation de la chaleur rejetée, en particulier pour un véhicule automobile équipé d'un moteur à combustion interne, qui présente une pompe d'alimentation (1),
dans lequel au moins un capteur de température (T_{G}, T_{A}) est disposé dans le dispositif d'utilisation de la chaleur rejetée pour la détection directe ou indirecte de la température actuelle du fluide de travail,
dans lequel ledit au moins un capteur de température (T_{G}, T_{A}) est raccordé à une unité de commande (S) pour la commande d'un entraînement de la pompe,
dans lequel au moins une valeur de seuil de la température est prédéterminée dans l'unité de commande (S), que l'on compare à la température actuelle du fluide de travail, et
dans lequel, en cas de baisse en dessous d'une valeur de seuil de la température, on désactive l'entraînement de la pompe et dès lors le refoulement de la pompe au moyen de l'unité de commande (S) et, en cas de dépassement de cette valeur de seuil de la température ou d'une seconde valeur de seuil plus élevée définie de la température par rapport à cette valeur de seuil de la température, on enclenche l'entraînement de la pompe et dès lors le refoulement de la pompe,
**caractérisé en ce qu'**un corps (12) de la pompe d'alimentation (1) est raccordé au circuit de refroidissement (10, 11) du moteur à combustion interne (2) et le débit de celui-ci à travers le corps de pompe (12) peut être réglé au moyen d'un agencement de soupape.

2. Dispositif d'utilisation de la chaleur rejetée selon la revendication 1, **caractérisé en ce que** la valeur de seuil de la température en tant que valeur de seuil de désactivation correspond à la température de congélation du fluide de travail ou la deuxième valeur de seuil de la température en tant que valeur de seuil d'enclenchement se situe avec une distance de commutateur au-dessus de la première valeur de seuil de la température.

3. Dispositif d'utilisation de la chaleur rejetée selon la revendication 1 ou la revendication 2, **caractérisé en ce que** ledit au moins un capteur de température est disposé dans le fluide de travail dans la région de la pompe et/ou sur ou dans le corps de pompe.

4. Dispositif d'utilisation de la chaleur rejetée selon l'une quelconque des revendications 1 à 3, **caractérisé en ce que** la pompe d'alimentation (1) est conçue de telle manière qu'une quantité résiduelle congelée définie de fluide de travail lorsque la pompe est désactivée n'entraîne aucun dommage de la pompe.

5. Dispositif d'utilisation de la chaleur rejetée selon l'une quelconque des revendications 1 à 4, **caractérisé en ce que** le débit du circuit de refroidissement (10, 11) à travers le corps de pompe (1) peut être réglé à l'aide de l'agencement de soupape au moyen de l'unité de commande (S) en fonction de la température du fluide de travail du dispositif d'utilisation de la chaleur rejetée, et/ou **en ce que** l'agencement de soupape est formé par une soupape magnétique (13).

6. Dispositif d'utilisation de la chaleur rejetée selon l'une quelconque des revendications 1 à 4, **caractérisé en ce que** l'entraînement de la pompe se compose d'un dispositif de transmission mécanique (7, 8, 9) pour la transmission d'une rotation du moteur à combustion interne (2) à un arbre d'entraînement de la pompe (5).

7. Dispositif d'utilisation de la chaleur rejetée selon la revendication 6, **caractérisé en ce que** l'entraînement mécanique de la pompe se compose d'une roue de sortie (8) au moteur à combustion interne (2) et d'une roue d'entraînement (7) sur l'arbre d'entraînement de la pompe (5), qui sont reliées par un moyen d'entraînement périphérique (9) transmettant la rotation.

8. Dispositif d'utilisation de la chaleur rejetée selon la revendication 6, **caractérisé en ce que** l'entraînement mécanique de la pompe se compose d'une roue dentée de sortie au moteur à combustion interne (2) et d'une roue dentée d'entraînement sur l'arbre d'entraînement de la pompe (5), qui sont reliées directement ou indirectement via une ou plusieurs roue(s) dentée() intermédiaire(s) transmettant la rotation.

9. Dispositif d'utilisation de la chaleur rejetée selon l'une quelconque des revendications 1 à 8, **caractérisé en ce qu'**un embrayage (6) commutable avec l'unité de commande (S) est disposé dans l'arbre d'entraînement de la pompe (5), avec lequel le couplage au nombre de tours du moteur à combustion interne (2) et dès lors l'entraînement de la pompe peut être déconnecté et connecté.

10. Dispositif d'utilisation de la chaleur rejetée selon la revendication 9, **caractérisé en ce que** l'embrayage (6) est ouvert au moyen de l'unité de commande (S) en cas de baisse en dessous d'une valeur de seuil de la température dans des conditions de congélation et/ou en cas de baisse en dessous d'au moins une valeur de seuil au contraire plus élevée de la température lors de l'opération de chauffage du dispositif d'utilisation de la chaleur rejetée et/ou lors d'un fonctionnement de freinage et/ou de poussée du moteur à combustion interne (2) et l'entraînement de la pompe est ou reste de ce fait déconnecté.

11. Dispositif d'utilisation de la chaleur rejetée selon l'une quelconque des revendications 1 à 8, **caractérisé en ce que** l'arbre d'entraînement de la pompe présente un couplage permanent au nombre de tours du moteur à combustion interne (2) et la pompe est réalisée sous la forme d'une pompe variable, avec un débit de refoulement réglable avec l'unité de régulation (R).

12. Dispositif d'utilisation de la chaleur rejetée selon la revendication 11, **caractérisé en ce que** le débit de refoulement de la pompe est ramené à zéro au moyen de l'unité de régulation (R) en cas de baisse en dessous d'une valeur de seuil de la température dans des conditions de congélation et/ou en cas de baisse en dessous d'au moins une valeur de seuil au contraire plus élevée de la température lors de l'opération de chauffage du dispositif d'utilisation de la chaleur rejetée et/ou lors d'un fonctionnement de freinage et/ou de poussée du moteur à combustion interne (2).

13. Dispositif d'utilisation de la chaleur rejetée selon l'une quelconque des revendications 1 à 5, **caractérisé en ce que** l'entraînement de la pompe se compose d'une unité d'entraînement électrique (15).

14. Dispositif d'utilisation de la chaleur rejetée selon la revendication 13, **caractérisé en ce que** le nombre de tours de la pompe est ramené à zéro au moyen de l'unité de régulation (R) en cas de baisse en dessous d'une valeur de seuil de la température dans des conditions de congélation et/ou en cas de baisse en dessous d'au moins une valeur de seuil au contraire plus élevée de la température lors de l'opération de chauffage du dispositif d'utilisation de la chaleur rejetée et/ou lors d'un fonctionnement de freinage et/ou de poussée du moteur à combustion interne (2).

15. Dispositif d'utilisation de la chaleur rejetée selon l'une quelconque des revendications 1 à 14, **caractérisé en ce que** l'unité de commande (S) et/ou le cas échéant une unité de régulation (R) pour la pompe d'alimentation (1) est intégrée dans une unité de commande/régulation du véhicule de niveau prioritaire.

16. Véhicule, en particulier véhicule automobile et/ou véhicule utilitaire, muni d'un dispositif d'utilisation de la chaleur rejetée selon l'une quelconque des revendications précédentes.

17. Procédé de fonctionnement d'un dispositif d'utilisation de la chaleur rejetée, en particulier pour un véhicule automobile équipé d'un moteur à combustion interne, qui présente une pompe d'alimentation (1),
dans lequel au moins un capteur de température (T_{G}, T_{A}) est disposé dans le dispositif d'utilisation de la chaleur rejetée pour la détection directe ou indirecte de la température actuelle du fluide de travail,
dans lequel ledit au moins un capteur de température (T_{G}, T_{A}) est raccordé à une unité de commande (S) pour la commande d'un entraînement de la pompe,
dans lequel au moins une valeur de seuil de la température est prédéterminée dans l'unité de commande (S), que l'on compare à la température actuelle du fluide de travail, et
dans lequel, en cas de baisse en dessous d'une valeur de seuil de la température, on désactive l'entraînement de la pompe et dès lors le refoulement de la pompe au moyen de l'unité de commande (S) et, en cas de dépassement de cette valeur de seuil de la température ou d'une seconde valeur de seuil plus élevée définie de la température par rapport à cette valeur de seuil de la température, on enclenche l'entraînement de la pompe et dès lors le refoulement de la pompe,
**caractérisé en ce qu'**un corps (12) de la pompe d'alimentation (1) est raccordé au circuit de refroidissement (10, 11) du moteur à combustion interne (2) et le débit de celui-ci à travers le corps de pompe (12) peut être réglé au moyen d'un agencement de soupape.
